# EUROPEAN PATENT SPECIFICATION

(11) **EP 1 316 191 B1**
(45) Date of publication and mention of the grant of the patent: **05.04.2006**
(21) Application number: 01972396.4
(22) Date of filing: 28.08.2001
(51) Int. Cl.: H04L 29/06, H04L 12/24, G06Q 50/00, G07F 7/00, B67D 5/06, B67D 5/14

(54) **VENDING SYSTEM**
VERKAUFSAUTOMAT
SYSTEME DE VENTE

(30) Priority: 01.09.2000 GB 0118970
(43) Date of publication of application: 04.06.2003
(73) Proprietor: Gilbarco S.p.A., 50145 Firenze (IT)
(72) Inventor: CARAPELLI, Giovanni, I-50142 Firenze (IT)
(74) Representative: Gervasi, Gemma
(86) International application number: PCT/IB2001/001854
(87) International publication number: WO 2002/019286

(56) References cited:
- WO-A-99/41717
- BIESZCZAD A ET AL: "TOWARDS PLUG-AND-PLAY NETWORKS WITH MOBILE CODE" CANNES, NOV. 18 - 21 1997,ÄS.L.Ü: ÄS.NÜ, vol. CONF. 13, 18 November 1997 (1997-11-18), pages 255-269, XP000753904 ISBN: 2-7261-1104-1
- PATENT ABSTRACTS OF JAPAN vol. 2000, no. 02, 29 February 2000 (2000-02-29) & JP 11 306424 A (ISA:KK), 5 November 1999 (1999-11-05)
- PATENT ABSTRACTS OF JAPAN vol. 1999, no. 12, 29 October 1999 (1999-10-29) & JP 11 185120 A (SANYO ELECTRIC CO LTD), 9 July 1999 (1999-07-09)

## Description

The present invention relates to a vending system which can interface with a mobile communication device of a client, (purchaser), the invention being concerned with facilitating the interfacing between the client mobile communicator and a service provider of the vending system, which service provider could be a drinks dispenser to a car wash or possibly even a point-on-sale terminal.

A purchaser of goods and services at present normally either pays cash for those goods and services or has them charged to a credit or debit card.

With the proliferation of personal communicators for example mobile phones, digital personal assistant or mobile personal computers (which personal computer could be associated with a vehicle), it is possible for a service provider, which term for the purposes of this specification will include a provider of both services and vendor of products, charge a product or service directly to an account associated with a customers mobile communicator, or an account accessed through the mobile communicator. For example in the case of a mobile phone, a product or service can be charged to the client's mobile phone account but in the case of other devices could be billed to an account associated with that mobile communicator. The invention with the current state of technology is primarily directed to mobile phones, but as technology develops it will be equally applicable to other mobile communicators which may be associated with a client.

A problem encountered in implementing a direct billing system via a client communicator is that different types of client communicator may operate different physical and software media for example a mobile phone will typically operate by a different system to a personal digital assistant and although there has been huge efforts to standardise mobile phone communication networks these are not all compatible. To be worthwhile implementing a system it is important that a service provider can communicate with as many types of client communicator as possible.

In addition to the above mentioned problems there is also the problem that the service provider equipment may vary from one service provider to another. For example if a retail fuelling environment is considered then there will normally be a central processor unit CPU, or master unit, located in the service station kiosk controlling a plurality of fuel dispensers, which each constitute the service provider unit, and possibly other types of service provider units, for example a car wash. Each of the service providers may be manufactured by any number of different manufacturers and employ different software. Also there are different types of controller also available from different manufacturers which may all run on different software. In WO 99/41717 it is described A system for providing a management architecture accessible from remote Internet compliant browsers to provide real time access and configuration of various vending machines.

Given the above it will be realised that there can be great problems in setting up a system, particularly if it contains a number of service provider units of different types, as will typically be found in a fuel dispensing environment, if these are all to interface with a client communicator. An object of the present invention is to provide an improved vending system.

According to a first aspect of the present invention there is provided a vending system comprising a master unit and at least one service provider unit connected through a network, comprising means to automatically configure a communication interface between said service provider unit and a client unit when the latter is connected to the network.

The means to automatically configure the communication interface between the client unit and said service provider unit comprises:
driver software of the client unit provided at the client unit and transmitted to the master unit through said RF interfaces;
driver software of the service provider unit provided at the master unit;
means to associate said driver software of the client unit and of the service provider unit in order to automatically configure a communication interface between said client unit and
said service provider unit. This enables the right driver software to be transferred between the appropriate devices.
By employing the present invention, it is possible to configure a communication interface between the service provider and a client mobile communicator unit automatically when the client unit comes into close proximity to the service provider unit or master unit.

Advantageously the means to associate said driver software of the client unit and of the service provider unit comprises discovery and lookup software able to discover, join and make available to each other said client and service provider unit.

The various components of the vending system may be conveniently connected through a TCP/IP enabled network.

Advantageously the system further comprises a remote controller connected to said network from which remote controller said driver software of said service provider unit is downloaded to said master unit. This enables new driver software to be implemented as new services, products or networks are catered for and enables a master unit, which for example may be central controller in a fuel dispensing environment to receive the new software from a central source, which may be a corporate computer associated with a particular oil company, or a computer associated with a company employed to provide such a service.

One embodiment of the present invention will now be described by way of example only with reference to the accompanying drawings of which:
Figure 1 schematically illustrates a vending system in accordance with the present invention; and
Figure 2 illustrates the operation of the system in accordance with figure 1.

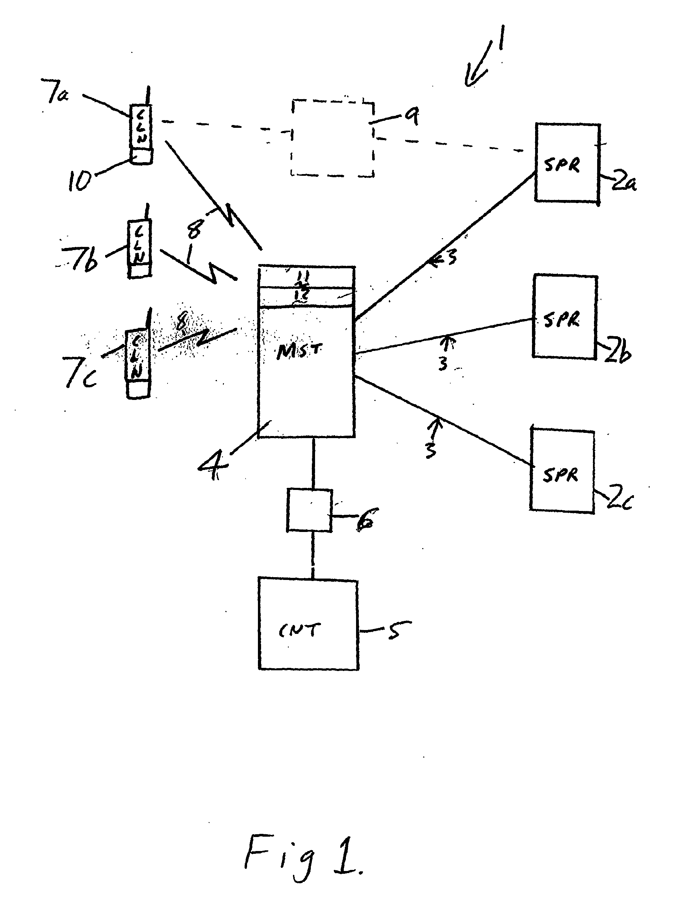

Referring to figure 1, the vending system illustrated generally as 1 comprises a number of service provider units 2a to 2c, which in the example given are fuel dispensers at a fuelling station but could equally be other proliferal devices at a service station for example a car wash, a kiosk of a fast food restaurant or shop associated with the fuelling station, but in another environment could for example be a number of vending machines such as drinks machines or ticket machines normally associated with a general common location, for example a number of vending machines or ticket machines at a railway station or airport.

The service provider units 2a to 2c are linked by a communication network 3, which may be by way of wires or optical fibres, an internet connection or a wireless connection, to a local central controller 4, which in the present example is the CPU of the fuelling station normally found in the kiosk or back office of the fuelling station. The central processor unit hereinafter referred to as the master unit 4, is connected to a remote controller 5 which can download software via the internet, schematically illustrated as 6, or some other such convenient link.

Also forming part of the vending system are a number of client units 7a to 7c which are mobile communicators in the form of mobile phones, each having an account associated with that phone. However the mobile communicator need not necessarily be a mobile phone but could be a personal digital assistant or portable computer (perhaps associated with a motor car) and may be able to communicate via an internet with an accounting authority.

On arriving at the fuelling station 1 and coming into proximity of a service provider unit, or alternatively an antenna associated either with the service provider unit 2 or the master unit 4, the client unit 7, typically a mobile phone, establishes a link with a service provider unit 2. In figure 1 this link is shown schematically as being established via a radio link to the master unit 4 but this could be an infrared link, in any case it is likely to be a link other than a link via the cellular network through which the communication unit would communicate with a cellular network or the internet. Although the link shown is to the master unit 4 it may equally be direct to the service provider unit 2, in which case, where the service provider 2 is a fuel dispenser, when the client unit 7 comes into proximity of the service provider unit 2 a link may be automatically established directly to that service provider unit.

Although the present invention is not concerned with the purpose of the link between the client unit 1 and the service provider 2, the essential purpose of such a link is normally to enable the service provider 2 to obtain authorisation for a transaction to be subsequently charged to an account associated with a particular client unit 7. This may be achieved by a signal from the service provider to the client unit 7 containing details of the service provider, the client unit 7 then contacting its account authority via the cellular network. An account authority associated with that account in turn then contacts the service provider, possibly via the master unit 4 for authorising the transaction. However the purpose of the link is not of direct concern to the present invention and the present invention is not limited to any specific use of the link, it surfices to say that such a link is desired.

The link between a client unit 7 and a service provider 2 requires an interface between the client unit 7 and service provider unit 2 and this is schematically illustrated as communication interface 9. How this communication interface 9 physically exists is to a certain extent a matter of design choice. It may be a direct link between unit 7 and service provider unit 2, comprising either an infrared or radio link with appropriate receiver/transmitters at either end and associated circuitry and software, or alternatively may be a link via the master unit 4 as shown in the present embodiment where the link comprises radio link 8 and wire link 3.

Each client unit 7a to 7c comprises client driver software and proxy code 10 and the master unit 4 comprises driver software and proxy code 11 associated with each service provider unit 2 connected to the master unit 4.

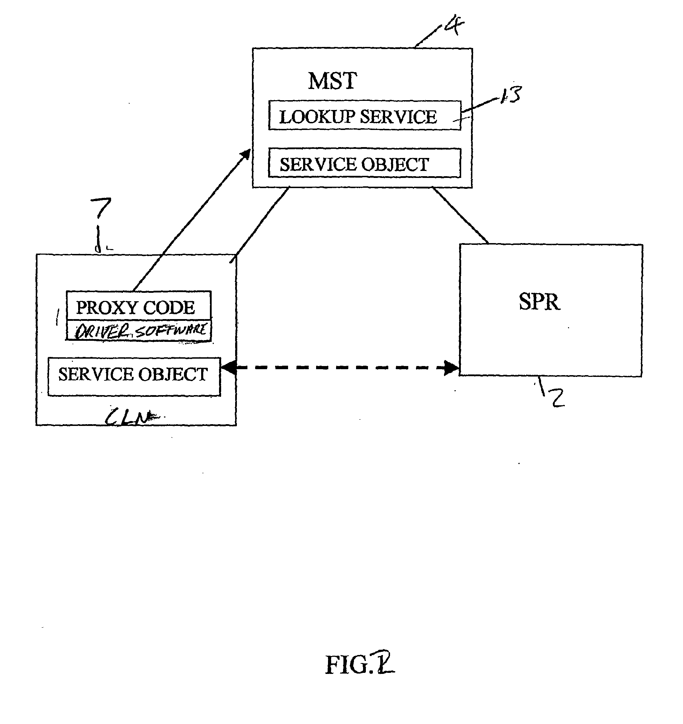

When the client unit 7 comes in to close proximity of the service provider unit 2 or some other area, the driver software and proxy code, as illustrated with reference to figure 2 are transmitted to the master unit 4 via radio link 8. As already stated this radio link could be directly to the service provider unit 2 which then in turn transmits it via a link 3 to the master unit 4. The master unit 4 additionally, comprises means 12 which associates the client driver software with the service provider driver software to automatically configure a communication interface between said client unit and said service provider unit. In this regard the master unit 4 runs an operating system to control both the master unit itself and the service provider units 2, the operating system having a layered structure architecture and comprising:
a communications infrastructure layer, able to provide the system with the connectivity function and communication protocols required;
a discovery and lookup layer 13 able to discover the presence of any unit connected to the network to register and make available the system resources;
and a service layer where the driver software the service provider, including all the features
and attributes of the service and the proxy object of the service is loaded.

When a new client unit 7 connects to the fuelling station network 2 its details are transmitted to the lookup service 13 transmitting its driver software including its proxy code, and service requests, containing request of all the system resources that the unit needs. Through the lookup software the system finds out that certain resources have been requested from the client unit 7 and where they are present in the system they are made available to the client through the lookup software.

The lookup layer of the master unit 4 registers the availability in the system of the requested service, associates it to all the necessary driver software loaded in the service layer, and sends a copy of the requested service object comprising the proxy code of the requested services, to the client unit 7 so that the latter can interact directly with the service provider unit 2 via the downloaded service object.

Typically the units of the system are connected through a TCP/IP protocol enabled network and the proxy codes include an IP address of the corresponding service or client unit. The operating system is typically a JAVA™ operating system said architecture is a JINI™ based layer architecture. The system can be supplemented to accommodate any type of device or service via a central controller 5 typically associated with a corporate headquarters such as an oil company, providing the master unit 4 with the driver software corresponding to that unit or device, and this may be achieved by internet connection 6.

The present invention has been described in relation to a fuel dispensing application but it is in no way limited to such an application. Similarly many variations and modification other then those described will occur to those skilled in the art, which modifications and implementations will be within the scope of the appended claims.

## Claims

1. A vending system (1) comprising a master unit (4), at least one service provider unit (2) connected through a network (3) and means (12) to automatically configure a communication interface (9) between said service provider unit (2) and a client unit (7) when the latter is connected to the network, **characterised in that** said means (12) and said service provider unit (2) comprise:
a driver software (10) of the client unit provided at the client unit and transmitted to the master unit (4) through said interface;
a driver software (11) of the service provider unit (2) provided at the master unit (4);
means (12) to associate said driver software of the client unit and of the service provider unit in order to automatically configure a communication interface between said client unit and said service provider unit.

2. A system according to claim 1, wherein said means (12) to associate said driver software of the client unit and of the service provider unit comprise discovery and lookup software (13) able to discover, join and make available to each other said client and service provider unit.

3. A system according to any preceeding claim wherein said master unit (4), said client unit (7) and said service provider unit (2) are connected through a TCP/IP enabled network.

4. A system according to any preceeding claim wherein said driver software of the client unit (7) and of the service provider unit (2) comprises a proxy code respectively of the client unit and of the service provider unit.

5. A system according to claim 1 further comprising remote controller (5) connected to said network from which remote controller said driver software (11) of said service provider unit is downloaded to said master unit

6. A system according to claim 5, wherein said controller in connected to said network through the Internet (6).

7. A system according to at least one of claims 1-6, wherein said master unit (4) is a control station of a gas station and at least one of said service provider units (2) is a fuel dispenser.

## Patentansprüche

1. Verkaufsautomat (1), umfassend eine Master-Einheit (4), wenigstens eine Diensteanbietereinheit (2), die über ein Netz (3) verbunden ist, sowie Mittel (12) zum automatischen Konfigurieren einer Kommunikationsschnittstelle (9) zwischen der genannten Diensteanbietereinheit (2) und einer Kundeneinheit (7), wenn die Letztere mit dem Netz verbunden ist,
**dadurch gekennzeichnet, dass** die genannten Mittel (12) und die genannte Diensteanbietereinheit (2) umfassen:
eine Treiber-Software (10) der Kundeneinheit, die in der Kundeneinheit vorgesehen ist und über die genannte Schnittstelle an die Master-Einheit (4) gesendet wird;
eine Treiber-Software (11) der Diensteanbietereinheit (2), die in der Master-Einheit (4) vorgehen ist;
Mittel (12), die die genannte Treiber-Software der Kundeneinheit und der Diensteanbietereinheit zuordnen, um eine Kommunikationsschnittstelle zwischen der genannten Kundeneinheit und der genannten Diensteanbietereinheit automatisch zu konfigurieren.

2. Verkaufsautomat (1) gemäß Anspruch 1, bei dem die genannten Mittel (12), die die genannte Treiber-Software der Kundeneinheit und der Diensteanbietereinheit zuordnen, eine Entdeckungs- und Nachschlage-Software (13) umfassen, die die genannte Kundeneinheit und die genannte Dienstesnbietereinheit entdecken, miteinander verbinden und füreinander verfügbar machen kann.

3. Verkaufsautomat (1) gemäß einem vorherigen Anspruch, bei dem die genannte Master-Einheit (4), die genannte Kundeneinheit (7) und die genannte Diensteanbietereinheit (2) über ein TCP/IP-fähiges Netz verbunden sind.

4. Verkaufsautomat (1) gemäß einem vorherigen Anspruch, bei dem die genannte Treiber-Software der Kundeneinheit (7) und der Diensteanbietereinheit (2) einen Proxy-Code der Kundeneinheit bzw. der Diensteanbietereinheit umfasst.

5. Verkaufsautomat (1) gemäß Anspruch 1, ferner umfassend eine mit dem genannten Netz verbundene ferne Steuereinheit (5), von der die genannte Treiber-Software (11) des genannten Diensteanbieters in die genannte Master-Einheit heruntergeladen wird.

6. Verkaufsautomat (1) gemäß Anspruch 5, bei dem die genannte Steuereinheit über das Internet (6) mit dem genannten Netz verbunden ist.

7. Verkaufsautomat (1) gemäß einem der Ansprüche 1 bis 6, bei dem die genannte Master-Einheit (4) ein Bedienungsstand einer Tankstelle ist und bei dem wenigstens eine der genannten Diensteanbietereinheiten (2) eine Kraftstoffzapfanfage ist.

## Revendications

1. Système de vente (1) comprenant une unité maître (4), au moins une unité formant fournisseur de services (2) connectée par un réseau (3) et des moyens (12) pour configurer automatiquement une interface de communication (9) entre ladite unité formant fournisseur de services (2) et une unité client (7) lorsque la dernière est connectée au réseau, **caractérisé en ce que** ledit moyen (12) et ladite unité formant fournisseur de services (2) comprennent:
un logiciel attaqueur (10) de l'unité client réalisé à l'unité client et transmis à l'unité maître (4) par ladite interface;
un logiciel attaqueur (11) de l'unité formant fournisseur de services (2) réalisé à l'unité maître (4);
des moyens (12) pour associer ledit logiciel attaqueur de l'unité client et de l'unité formant fournisseur de services pour configurer automatiquement une interface de communication entre ladite unité client et ladite unité formant fournisseur de services.

2. Système selon la revendication 1, où lesdits moyens (12) pour associer ledit logiciel attaqueur de l'unité client et de l'unité formant fournisseur de services comprennent un logiciel de découverte et de consultation (13) apte à découvrir, joindre et à rendre disponible ladite unité client et ladite unité formant fournisseur de services l'une à l'autre.

3. Système selon l'une des revendications précédentes, où ladite unité maître (4), ladite unité client (7) et ladite unité formant fournisseur de services (2) sont connectées par un réseau TCP/IP validé.

4. Système selon l'une des revendications précédentes, où ledit logiciel attaqueur de l'unité client (7) et de l'unité formant fournisseur de services (2) comprennent un code procuration respectivement de l'unité client et de l'unité formant fournisseur de services.

5. Système selon la revendication 1, comprenant en outre un dispositif de commande à distance (5) connecté audit réseau, et par ledit dispositif de commande à distance, ledit logiciel attaqueur (11) de ladite unité formant fournisseur de services est chargé dans ladite unité maître.

6. Système selon la revendication 5, où ledit dispositif de commande est connecté audit réseau par l'Internet (6).

7. Système selon au moins l'une des revendications 1 à 6, où ladite unité maître (4) est un poste de commande d'une station d'essence et au moins l'une desdites unités formant fournisseur de services (2) est un distributeur de combustible.
